# EUROPEAN PATENT APPLICATION

(11) **EP 2 725 536 A1**
(43) Date of publication of application: **30.04.2014**
(21) Application number: 13190514.3
(22) Date of filing: 28.10.2013
(51) Int. Cl.: G06Q 20/02, G06Q 20/20, G06Q 20/32, G06Q 20/38, G06Q 20/40

(54) **Mobile device-based electronic payment systems and methods**

(30) Priority: 26.10.2012 US 201213661981
(71) Applicant: Weinblatt, Lee S., Teaneck New Jersey 07666 (US)
(72) Inventor: Weinblatt, Lee S., Teaneck New Jersey 07666 (US)
(74) Representative: Epping - Hermann - Fischer

(57) **Abstract**

A system and method for processing a payment at a point-of-sale terminal in a mobile device-based electronic payment system. The method includes initiating an app on a mobile device of a user, transmitting a first security code request to a security code server, and receiving a first security code from a security code server. A bar code is determined based at least in part on the received first security code. The bar code represents data for authenticating the user when read by a bar code scanner. The bar code is displayed on a display of the mobile device.

## Description

### FIELD OF THE INVENTION

The disclosed embodiments relate to mobile device-based electronic payment system and methods. In particular, the disclosed embodiments are directed to an electronic payment system including a mobile user device which presents a bar code on its display to execute a payment transaction.

### BACKGROUND OF THE INVENTION

There is growing interest in electronic or "cash-less" retail payment systems which do not rely on traditional credit or debit cards. Such systems can expedite payment and allow customers to make purchases without carrying traditional credit or debit cards.

Conventional systems for making electronic retail payments include "contactless" credit and debit card systems, which are proprietary systems developed by banks and/or credit card companies that use electronically-equipped cards or other electronic devices capable of transmitting and receiving radio frequency (RF) signals. However, such contactless systems are not standardized and do not necessarily incorporate all of the security features required by standards written for near-field communication (NFC) systems, which are systems designed to securely transmit data between devices using RF signals over short distances.

Efforts have been made to implement contactless payment systems using mobile phones equipped with NFC capability. For example, systems have been developed which allow payment information on a mobile phone to be read by an NFC reader at the register and also allow the use of manufacturer coupons which have been previously received by the mobile phone via emails. However, such payment systems generally do not include all of the security features required by NFC standards. There is also the possibility that a user's device could be surreptitiously read by a nearby NFC reader. In addition, if a user loses their mobile phone, then others may gain access to the user's credit cards. Furthermore, only a small portion of mobile phones currently have built-in NFC capabilities.

What is needed is a mobile device-based payment system which does not require built-in NFC capability and incorporates robust security features.

### SUMMARY OF THE INVENTION

The disclosed embodiments may involve a user phone, such as a smartphone, which communicates to a point-of-sale system by generating a bar code which is read by the point-of-sale scanner. In one embodiment, both the phone and the point of sale system have access, through data networks (e.g., the store's network connection for the point-of-sale system and the cellular data connection for the phone), connecting both to a security server which manages the security model. The phone may have an application (i.e., an "app") which is activated by the user. The app communicates with the server to generate the proper credential and displays this credential in the form of a bar code. The point-of-sale system reads this credential through its bar code scanner and also communicates with the security server. There are various security models which can be implemented using this technique.

In another embodiment, a phone may not have connectivity to a data network to access the security server. In this case, a technique such as the Rivest Shamir Adleman (RSA) algorithm may be used, which employs public and private keys.

Neither of these two embodiments requires any additional hardware beyond what is already available at the point of sale. One objective of these particular embodiments is to establish a method of electronic payment which uses the user's cell phone as the payment mechanism, but which does not require features which are not available on a typical cell phone, and which does not require any additional hardware at the point of sale beyond what is typically available at retailers.

In another embodiment, the user's phone may not have a data connection. This embodiment seeks to provide a secure payment system while avoiding the storage of sensitive information on the phone. In this embodiment, an audio link may be used with the point-of-sale system to push data to the phone to produce a bar code. The bar code is then used to pull data from the phone. This embodiment seeks to provide a communications channel between the phone and a server without using the phone data channel through the cellular network. This is advantageous in situations in which the point-of-sale location does not have good cellular coverage or the user's phone is a legacy device without a data channel. Thus, the point-of-sale system is used to route server communications to the phone using the audio link and from the phone using a bar code.

In another embodiment, a method is provided for processing a payment at a point-of-sale terminal in a mobile device-based electronic payment system. The method includes initiating an app on a mobile device of a user, transmitting a first security code request to a security code server, and receiving a first security code from a security code server. A bar code is determined based at least in part on the received first security code. The bar code represents data for authenticating the user when read by a bar code scanner. The bar code is displayed on a display of the mobile device.

In another embodiment, a method is provided for processing a payment at a point-of-sale terminal in a mobile device-based electronic payment system. The method includes receiving a first security code from a security code server, receiving bar code data from a scanner of the point-of-sale terminal based on scanning a bar code displayed on a display of the mobile device, and transmitting the bar code data to a payment processing server. The method further includes receiving a confirmation from the payment processing server that a payment has been processed.

In another embodiment, a system is provided for processing a payment at a point-of-sale terminal in a mobile device-based electronic payment system. The system includes a point-of-sale terminal configured to receive a first security code from a security code server. The system further includes a bar code scanner connected to the point-of-sale terminal which is configured to scan a bar code displayed on a display of the mobile device and transmit resulting bar code data to the point-of-sale terminal, the bar code representing data for authenticating the user. The point-of-sale terminal is further configured to transmit the bar code data to a payment processing server and receive a confirmation from the payment processing server that a payment has been processed.

In another embodiment, a system includes a point-of-sale terminal configured to receive a network security code from a security code server and detect the presence of a mobile device of a user. The system further includes an audio unit connected to the point-of-sale terminal which is configured to transmit an audio unit security code. The system further includes a bar code scanner connected to the point-of-sale terminal which is configured to scan a bar code displayed on a display of the mobile device and transmit resulting bar code data to the point-of-sale terminal. The point-of-sale terminal is further configured to transmit the bar code data to a payment processing server and receive a confirmation from the payment processing server that a payment has been processed.

In another embodiment, a method includes receiving a network security code from a security code server, detecting the presence of a mobile device of a user, and transmitting an audio unit security code from an audio unit connected to the point-of-sale terminal. The method further includes receiving bar code data from a scanner of the point-of-sale terminal based on scanning a bar code displayed on a display of the mobile device. The method further includes transmitting the bar code data to a payment processing server and receiving a confirmation from the payment processing server that a payment has been processed.

In another embodiment, a method includes initiating an app on a mobile device of a user and receiving a network security code from a security code server. The method further includes receiving, via an audio input of the mobile device, an audio unit security code from an audio unit connected to the point-of-sale terminal. The method further includes performing a comparison operation on the network security code and the audio unit security code. The method further includes displaying a bar code on a display of the mobile device if the comparison operation on the network security code and the audio unit security code returns a positive result.

In another embodiment, a method includes initiating an app on a mobile device of a user, transmitting a security code request to an audio unit connected to the point-of-sale terminal, and receiving, via an audio input of the mobile device, a first security code from the audio unit. A bar code is determined based at least in part on the received first security code. The bar code representing data for authenticating the user when read by a bar code scanner. The bar code is displayed on a display of the mobile device.

In another embodiment, a method includes receiving a first security code from a security code server, receiving a security code request from a mobile device of a user, and transmitting the first security code from an audio unit connected to the point-of-sale terminal. The method further includes receiving bar code data from a scanner of the point-of-sale terminal based on scanning a bar code displayed on a display of the mobile device, the bar code representing data for authenticating the user. The method further includes transmitting the bar code data to a payment processing server, and receiving a confirmation from the payment processing server that a payment has been processed.

In another embodiment, a system includes a point-of-sale terminal configured to receive a first security code from a security code server. The system further includes an audio unit connected to the point-of-sale terminal which is configured to receive a security code request and, in response, transmit the first security code. The system further includes a bar code scanner connected to the point-of-sale terminal which is configured to scan a bar code displayed on a display of the mobile device and transmit resulting bar code data to the point-of-sale terminal, the bar code representing data for authenticating the user. The point-of-sale terminal is further configured to transmit the bar code data to a payment processing server and receive a confirmation from the payment processing server that a payment has been processed.

### BRIEF DESCRIPTION OF THE DRAWINGS

The above and/or other aspects and advantages will become more apparent and more readily appreciated from the following detailed description of the disclosed embodiments taken in conjunction with the accompanying drawings of which:

Fig. 1 is a schematic block diagram of a mobile device-based electronic retail payment system in accordance with a first embodiment of the present invention;

Fig. 2 is a flow chart of the point-of-purchase interaction between the user device and a security code server to implement a purchase transaction in accordance with a first embodiment of the present invention; and

Fig. 3 is a flowchart of the process carried out by the electronic transaction system to complete a purchase transaction in accordance with a first embodiment of the present invention.

Fig. 4 is a schematic block diagram of a mobile device-based electronic retail payment system in accordance with a second embodiment of the present invention;

Fig. 5 is a flow chart of the point-of-purchase interaction between the user device, audio unit, bar code scanner, and a security code server to implement a purchase transaction in accordance with a second embodiment of the present invention;

Fig. 6 is a flow chart of the point-of-purchase interaction between the user device, audio unit, bar code scanner, and a security code server to implement a purchase transaction in accordance with a variant of the second embodiment of the present invention; and

Fig. 7 is a flowchart of the process carried out by the electronic transaction system to complete a purchase transaction in accordance with a second embodiment of the present invention.

### DETAILED DESCRIPTION OF THE DRAWINGS

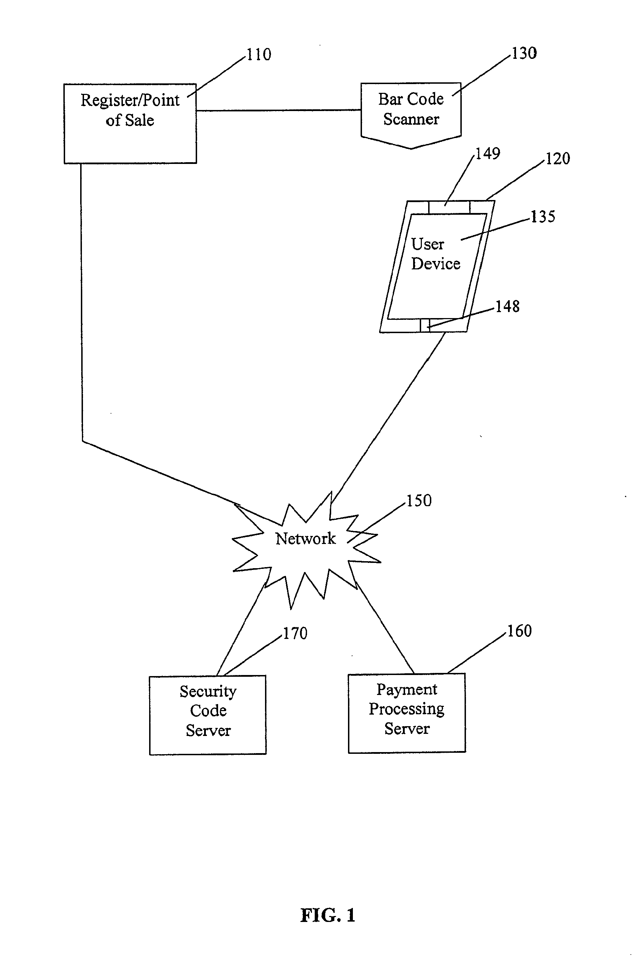

As shown in Fig. 1, in an embodiment of the present invention, a register 110 or other type of point-of-sale system (or "terminal") at a retail establishment is configured to interact with a mobile user device 120, e.g., a user's mobile phone. The register 110 is equipped with a conventional bar code scanner 130, which is used to read a bar code which is displayed on a screen 135 of the user device 120. The interaction between the register 110 and the user device 120 using the bar code scanner 130 will be described in further detail below.

The register 110 is configured to handle conventional retail purchase transactions, such as cash and credit or debit card transactions. The bar code scanner 130 is used in a conventional manner to scan price codes on retail items and then to process payment for the items. As discussed below, the bar code scanner 130 can also be used to read bar codes displayed by the user device 120.

Price information for the scanned items is retrieved from a payment processing server 160, which may also be used to process payment for the items. Payment may be made using the electronic payment system described herein or using conventional forms of payment such as credit or debit cards, Alternatively, the product price information and payment processing functions may be implemented on a number of separate servers. Other functions, such as coupon redemption, may be implemented on the payment processing server 160 and/or additional servers.

To perform these pricing and payment functions, the register 110 is connected to the payment processing server 160 via a network 150. The payment processing server 160 may be a server located at the retail establishment which is capable of receiving scanned bar code information and retrieving price information for the scanned items from a centralized database. Alternatively, the payment processing server 160 may be located at a remote location (or a combination of a local server and a remote server may be used). The network 150 may be an in-store internet protocol (IP) based network or may be a network which connects to other stores or to a central location. Such external network connections may be implemented through a private or public IP-based network (e.g., the Internet).

The register 110 is also connected via the network 150 to a security code server 170 which provides security information to the register 110 for interaction with the user device 120. The security code server 170 may be implemented at a remote location controlled by the administrator/provider of the payment system described herein. The security information and the nature of the interaction between the register 110 and the user device 120 are described in further detail below.

The various functions of the register 110 discussed above may be implemented, at least in part, by executing software on a processor of the register 110. The software may be stored in memory, e.g., random access memory or read-only memory, of the register 110. The software may also be stored in a storage medium of the register 110, e.g., flash memory, or other forms of computer-readable media, including non-transitory media. The software may be downloaded from a website and stored in a memory or storage medium of the register 110, or the software may be purchased on a computer-readable medium.

The mobile user device 120 may be, for example, a mobile phone which has a display and keyboard or a touch-based display to provide a user interface. The user device 120 includes radio frequency (RF) circuitry to allow a connection to voice circuits of a cellular phone network. The user device 120 also has the capability to send and receive data via an IP-based network provided via the cellular network. In addition, the user device 120 has a built-in microphone 148 and speaker 149, which are used to conduct voice telephone calls as well as other non-telephony based uses, such as producing music, producing alarm and notification sounds, recording voice memos, or receiving voice commands.

The user device 120 in this example may be referred to as a "smartphone" because it includes the data communication capability which allows it to connect to the Internet via the cellular network. The smartphone-type user device 120 will typically include a web browser application, which allows the user to connect to the Internet and access hypertext markup language (HTML) based information.

In the block diagram of Fig. 1, the user device 120 and the register 110 are depicted as being connected to a single network, e.g., the Internet. However, it is understood by those skilled in this field that the user device 120 may be connected through a series of network elements associated with the user's mobile carrier which ultimately allow the device to connect to the Internet. Likewise, the register 110 may be connected through a series of network elements associated with a private network of a retailer which also provide connectivity to the Internet.

The smartphone-type user device 120 also may include the ability to execute software applications (i.e., "apps") which have been stored on the device. The app may be stored in memory, e.g., random access memory or read-only memory, of the device 120. The app may also be stored in a storage medium of the device 120, e.g., flash memory, or other forms of computer-readable media, including non-transitory media. The app may be downloaded from a website and stored in a memory or storage medium of the device 120, or the app may be purchased on a computer-readable medium. In addition, it is understood by those skilled in this field that a software application in the form of an app may have functions similar to, or identical to, software executed on a website via the web browser of the device, e.g., using a "mobile" website which is specifically designed to be accessed on mobile devices. Thus, the functionality of the methods described herein may be implemented using apps, mobile websites, conventional websites, or a combination thereof.

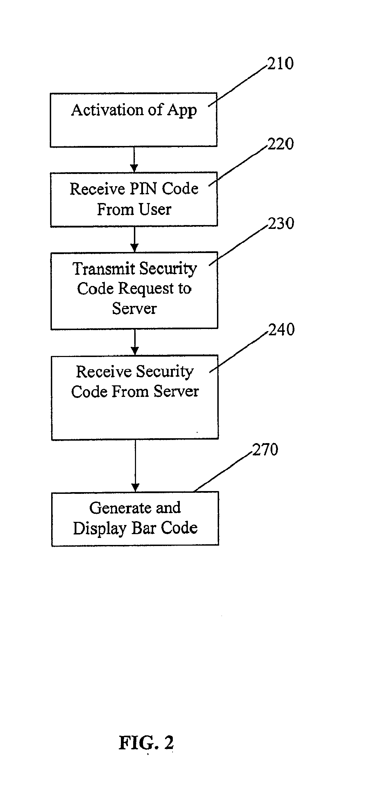

Fig. 2 presents a flow chart of the point-of-purchase interaction between the user device 120, bar code scanner 130, and security code server 170 to implement a purchase transaction. In this particular embodiment, the functionality of the transaction system is implemented on the user device 120 via an app which runs on the smartphone-type device and which may be activated by the user (step 210) upon reaching the register 110 with goods to be purchased. Once the app has been activated, e.g., by selecting a displayed icon, the user may be prompted to enter a personal identification number (PIN) or other type of security password (step 220).

After the PIN has been confirmed, the app accesses the security code server 170 via the network 150 to retrieve a current security code (step 230), which may be referred to as the "network security code." The retrieval of the network security code may be done automatically and transparently without requiring any further action by the user. The access to the security code server 170 may be implemented, for example, via a cellular data connection to the Internet. Alternatively, the user device 120 may be connected to an in-store network via a wireless fidelity (WiFi) connection.

The network security code is generated at the security code server 170 and may change periodically or continuously. The security code server 170 may perform authentication with the app running on the user device 120 in order to ensure that the request for the security code is coming from an authorized user. Once the network security code is received and stored in the user device 120, it may be valid for only a limited time period. If a network security code has previously been received by the user device 120 and is still valid, then it may not be necessary to perform the network access and network security code retrieval when the app is initiated.

The app generates a bar code and presents it on the display 135 of the user device 120 (step 270). The bar code may be at least partially derived from the network security code. The bar code is then scanned by the convention bar code scanner 130 of the register 110. For example, the user may hold out the user device 120 to the cashier who may scan the bar code with a handheld scanner. Alternatively, the user may swipe the bar code over an embedded product bar code scanner 130. The scanning of the bar code initiates a payment transaction, as described in further detail below.

In a variant of the first embodiment, if the user device 120 does not have connectivity to a data network to access the security code server 170, then other types of encryption algorithms may be used which do not require access to a server. For example, a technique such as the RSA algorithm may be used, which employs public and private keys. This requires the storage of sensitive information on the phone itself.

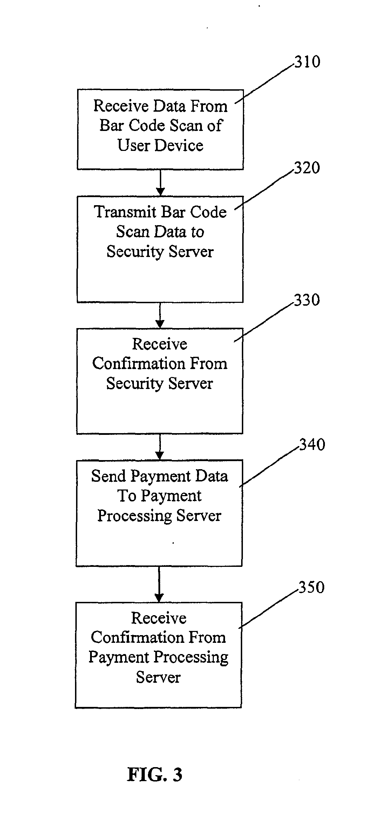

Fig. 3 presents a flowchart of the process carried out by the transaction system to complete a purchase transaction. The user device 120, as described above, generates and displays a bar code after receiving the network security code. A bar code scanner 130 is used to read the displayed bar code, which generates bar code data. The bar code data is received by the electronic transaction system (step 310) and transmitted to the payment processing server 160 (step 320). For example, the register 110 may receive bar code data from the bar code scanner 130 and transmit the bar code data to the payment processing server 160 via the network 150.

The bar code data may be the type of code which is valid for only one transaction. There are various ways to produce such a single-use transaction code, which is similar to a one-time password (OTP). OTP generation algorithms typically make use of randomness in order to make it difficult to predict future OTPs by observing previous ones. Approaches for the generation of OTPs are typically based on time-synchronization between an authentication server and a client. The techniques may use public key infrastructure (PKI). Other techniques, such as cryptographic token techniques, do not require the use of private/public key infrastructure. Various providers, such as RSA (security division of EMC Corporation), have solutions for generating OTPs.

The payment processing server 160, upon receiving the bar code data, acts to verify the transaction. The verification may require access to the security code server 170 in order to retrieve code information (i.e., the network security code transmitted earlier) to authenticate the bar code data. The security code server 170 may send a confirmation which is received by the payment processing server 160 and may also be received by the register 110 (step 330).

Alternatively, the bar code data may be sent to the security code server 170, which may then send a payment authorization to the payment processing server 160 (e.g., a credit card payment processing server). The security code server 170 may store payment information for the user, such as credit card data, which is sent to the payment processing server 160 when the transaction has been authorized. Although the payment processing server 160 and security code server 170 are depicted as separate servers, it is also possible for the functions of these servers to be implemented in a single server. It is understood that the term "server" may include an array of interconnected server devices.

If the transaction is verified, then a payment is processed. The processing may include the sending of payment data, such as the total amount of the purchase, to the payment processing server 160 (step 340). For example, the payment processing server 160 may have previously-stored credit or debit card account numbers for the user, or the user may maintain an account specifically created for the electronic transaction system which can be debited by the payment processing server 160. After payment is effected, a confirmation is sent from the payment processing server 160 back to the register 110 (step 350), e.g., via the network 150, and the transaction is completed.

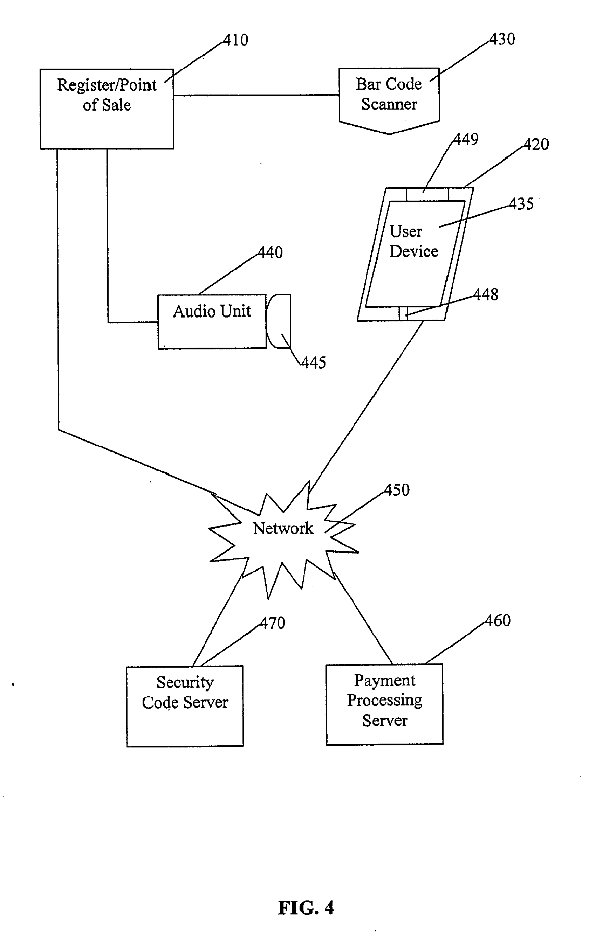

As shown in Fig. 4, in a second embodiment, a register 410 or other type of point-of-sale system (or "terminal") at a retail establishment may be configured to interact in two different ways with a mobile user device 420, e.g., a user's mobile phone. First, the register 410 is equipped with a conventional bar code scanner 430, which may be used to read a bar code which is displayed on a screen 435 of the user device 420. Secondly, the register 410 has an associated audio unit 440 which produces encoded audio signals which are emitted by a speaker 445 and received by a microphone 448 of the user device 420. The audio unit 440 may be connected to the network 450 via the register 410, as shown, and/or independently connected to the network 450. The interaction between the register 410 and the user device 420 using the bar code scanner 430 and audio unit 440 will be described in further detail below.

The register 410 is connected to the payment processing server 460 via a network 450. The payment processing server 460 may be a server located at the retail establishment which is capable of receiving scanned bar code information and retrieving price information for the scanned items from a centralized database. Alternatively, the payment processing server 460 may be located at a remote location (or a combination of a local server and a remote server may be used). The network 450 may be an in-store internet protocol (IP) based network or may be a network which connects to other stores or to a central location. Such external network connections may be implemented through a private or public IP-based network (e.g., the Internet).

The register 410 is also connected via the network 450 to a security code server 470 which provides security information to the audio unit 440 for interaction with the user device 420. The security code server 470 may be implemented at a remote location controlled by the administrator/provider of the payment system described herein. The security information and the nature of the interaction between the audio unit 440 and the user device 420 are described in further detail below.

The mobile user device 420 may be, for example, a smartphone which has a display and keyboard or a touch-based display to provide a user interface. The user device 420 includes radio frequency (RF) circuitry to allow a connection to voice circuits of a cellular phone network. The user device 420 also has the capability to send and receive data via an IP-based network provided via the cellular network. In addition, the user device 420 has a built-in microphone 448 and speaker 449, which are used to conduct voice telephone calls as well as other non-telephony based uses, such as producing music, producing alarm and notification sounds, recording voice memos, or receiving voice commands.

In the block diagram of Fig. 4, the user device 420 and the register 410 are depicted as being connected to a single network, e.g., the Internet. However, it is understood by those skilled in this field that the user device 420 may be connected through a series of network elements associated with the user's mobile carrier which ultimately allow the device to connect to the Internet. Likewise, the register 410 may be connected through a series of network elements associated with a private network of a retailer which also provide connectivity to the Internet.

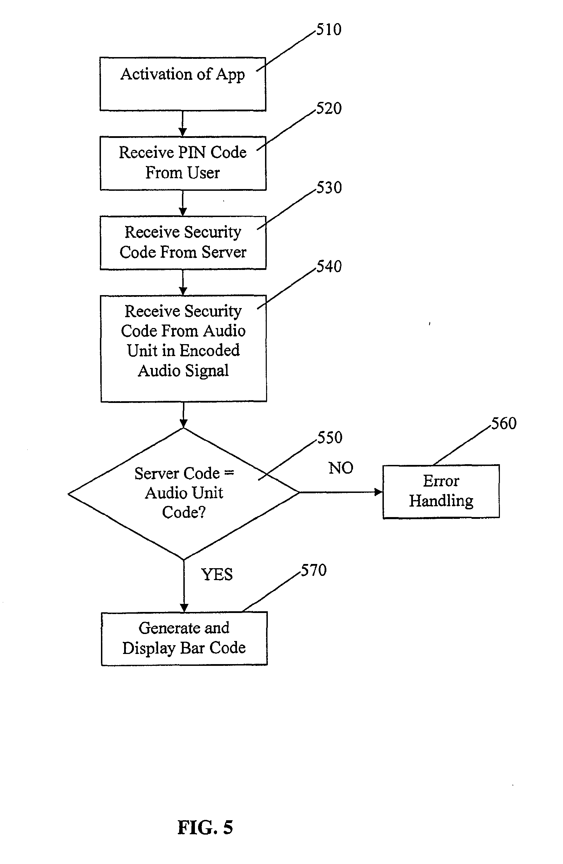

Fig. 5 presents a flow chart of the point-of-purchase interaction between the user device 420, audio unit 440, and bar code scanner 430 to implement a purchase transaction. In this particular embodiment, the functionality of the transaction system is implemented on the user device 420 via an app which runs on the smartphone-type device and which may be activated by the user (step 510) upon reaching the register 410 with goods to be purchased. Once the app has been activated, e.g., by selecting a displayed icon, the user may be prompted to enter a personal identification number (PIN) or other type of security password (step 520).

After the PIN has been confirmed, the app accesses the security code server 470 via the network 450 to retrieve a current security code (step 530), which may be referred to as the "network security code." The retrieval of the network security code may be done automatically and transparently without requiring any further action by the user. The access to the security code server 470 may be implemented, for example, via a cellular data connection to the Internet. Alternatively, the user device 420 may be connected to an in-store network via a wireless fidelity (WiFi) connection.

The network security code is generated at the security code server 470 and may change periodically or continuously. The security code server 470 may perform authentication with the app running on the user device 420 in order to ensure that the request for the security code is coming from an authorized user. Once the network security code is received and stored in the user device 420, it may be valid for only a limited time period. If a network security code has previously been received by the user device 420 and is still valid, then it may not be necessary to perform the network access and network security code retrieval when the app is initiated.

The app may then prompt the user to place the user device 420 near the audio unit 440 installed at the register 410. The audio unit 440 may detect that the user device 420 is in proximity via infrared or another type of sensor. Upon detecting the user device 420, the audio unit 440 emits an audio tone which is encoded with a security code (step 540), which may be referred to as the "audio unit security code."

Like the network security code, the audio unit security code is generated at the security code server 470 and may change periodically or continuously. The audio unit security code may be received by the audio unit 440 through the register 410, as shown in Fig. 4, or directly from the network 450, e.g., the Internet or a combination of the Internet and an internal store network. The audio unit security code may, for example, contain a specific store identifier and date and/or time information. Each store that uses the electronic transaction system may receive a new audio unit security code each day, or every hour of the day.

The audio tone sounds like a musical tone to a listener, as it is within the range of frequencies of human hearing. The encoding may be done using various common forms of signal encoding, such as, for example, amplitude and/or phase modulation. The encoded audio signal is received by the microphone 448 of the user device 420 and is decoded by the app to extract the audio unit security code.

The app compares the received audio unit security code to the security code received via the network 450 (step 550). If the codes do not agree, then an error handling routine is invoked (step 560), which provides appropriate steps for rectifying the disagreement, such as, for example, accessing the network 450 to repeat the security code retrieval step or performing various diagnostic routines to ascertain the cause of the disagreement. Various error messages may be displayed to the user in the event of a disagreement of the retrieved security codes.

Although Fig. 5 depicts a simple comparison of the audio unit security code and the network security code, more complex security algorithms may also be used. For example, the app may perform an operation on the two codes to generate a result which is then compared to a stored value. A hash function may be used as part of the comparison to the stored value in order to avoid storing a secret value which would be vulnerable to being compromised. A hash function is a one-way calculation which can receive various inputs and produce a corresponding digest output. The inputs cannot be readily ascertained from a stored digest output, but a particular input will always result in the same digest output.

Thus, in one embodiment, the received security codes could be combined according to an algorithm and the result could be hashed and compared to a previously stored digest value. Alternatively, the network security code may be a hash (i.e., a digest output) of the audio unit security code. In such a case, the received audio unit security code is hashed by the app and compared to the stored network security code. Alternatively, the audio unit security code may be a hash of the network security code. The comparison operation, according to these various embodiments, produces a positive result (i.e., indicating agreement of the two security codes) or a negative result.

If the audio unit security code and network security code agree, as will usually be the case, the app generates a bar code and presents it on the display 435 of the user device 420 (step 570). The bar code may be at least partially derived from the audio unit security code and/or the network security code. The bar code is then scanned by the convention bar code scanner 430 of the register 410. For example, the user may hold out the user device 420 to the cashier who may scan the bar code with a handheld scanner. Alternatively, the user may swipe the bar code over an embedded product bar code scanner 430. The scanning of the bar code initiates a payment transaction, as described in further detail below.

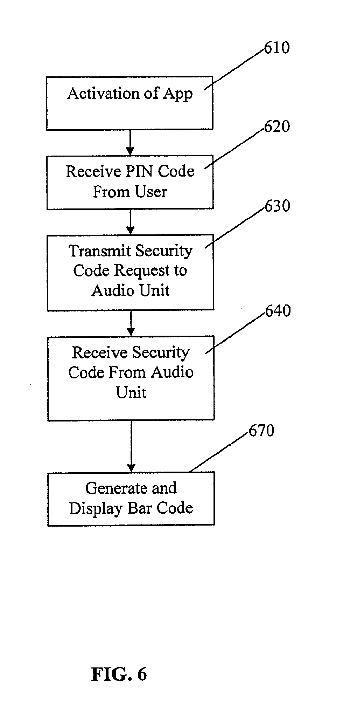

Fig. 6 is a flow chart of the point-of-purchase interaction between the user device 420, audio unit 440, bar code scanner 430, and a security code server 470 to implement a purchase transaction in accordance with a variant of the second embodiment, as depicted in Fig. 4. In this embodiment, only a network security code is used (as in the first embodiment), rather than both a network security code and an audio unit code, as discussed above with respect to the second embodiment. However, the network security code is transmitted by the security code server 470 to user device 420 via the audio unit 440, rather than directly to the user device 420 via a cellular data network. This variant may be useful in situations in which the user device 420 does not have direct access to the security code server 470 via a network, such as, for example, when the user device 420 cannot access the cellular data network.

As above, the functionality of the transaction system is implemented on the user device 420 via an app which runs on the smartphone-type device and which may be activated by the user (step 610) upon reaching the register 410 with goods to be purchased. Once the app has been activated, e.g., by selecting a displayed icon, the user may be prompted to enter a personal identification number (PIN) or other type of security password (step 620).

After the PIN has been confirmed, the app directly accesses the audio unit 440 (rather than the security code server 470 via the network 450 as in the other embodiments) to request a current security code (step 630), which may be referred to as the "network security code." The retrieval of the network security code may be done automatically and transparently without requiring any further action by the user. The access to the audio unit 440 may be implemented, for example, by the transmission of a security code request in the form of an audio code by the user device 420 to the audio unit 440. Alternatively, the user device 420 may be connected to an in-store network via a wireless fidelity (WiFi) connection which, in turn, provides access to the audio unit 440.

The network security code is generated at the security code server 470 and may change periodically or continuously. The security code server 470 then periodically sends security codes to the point-of-sale terminal for transmission by the audio unit 440 to the user device 420. The user device 420 receives the network security code in the form of an encoded audio tone (step 640). Once the network security code is received and stored in the user device 420, it may be valid for only a limited time period. If a network security code has previously been received by the user device 420 and is still valid, then it may not be necessary to perform the network access and network security code retrieval when the app is initiated.

The app generates a bar code and presents it on the display 435 of the user device 420 (step 670). The bar code may be at least partially derived from the network security code. The bar code is then scanned by the convention bar code scanner 430 of the register 410. The scanning of the bar code initiates a payment transaction, as described in further detail below.

Thus, in this variant of the second embodiment, if the user device 420 does not have connectivity to a data network to access the security code server 470, the network security code can be received via the audio unit 440. This provides authentication in a manner which does not require the storage of sensitive information on the user device 420 itself, as in the case of an RSA encryption technique, or the like.

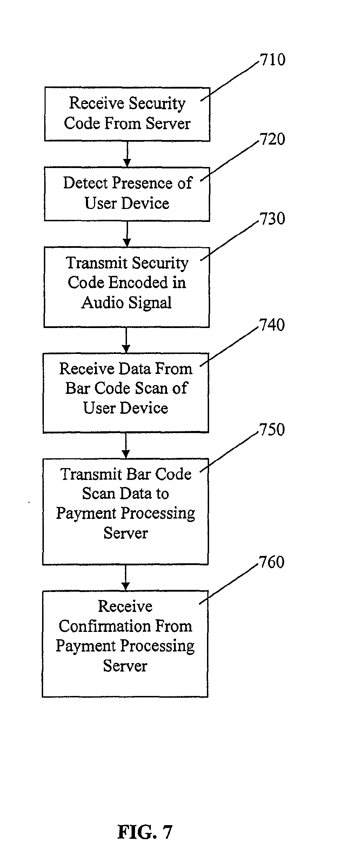

Fig. 7 presents a flowchart of the process carried out by the transaction system to complete a purchase transaction. As discussed above, the audio unit 440 produces an audio signal encoded with a security code, which is received from the security code server 470 (step 710). This audio unit security code may be wholly or partially generated by the security code server 470 and transmitted to the audio unit 440 via the network 450. For example, the audio unit security code may be periodically generated by the security code server 470 and transmitted to the audio unit 440. Alternatively, the audio unit security code may be generated in the audio unit 440 based on a synchronizing code, timing code, nonce, or random code periodically received from the security code server 470 via the network 450. The step of receiving the security code from the security code server 470, thus, may entail a generation step in the audio unit 440.

As discussed above, the audio unit 440 detects that the user device 420 is in proximity via infrared or another type of sensor (step 320). Upon detecting the user device 420 (step 720), the audio unit 440 emits an audio tone which is encoded with the audio unit security code, thereby transmitting the audio unit security code to the user device 420 (step 730). The user device 420, as described above, generates and displays a bar code after receiving the audio unit security code. A bar code scanner 430 is used to read the displayed bar code, which generates bar code data. The bar code data is received by the electronic transaction system (step 740) and transmitted to the payment processing server 460 (step 750). For example, the register 410 may receive bar code data from the bar code scanner 430 and transmit the bar code data to the payment processing server 460 via the network 450. The bar code data may be valid for only one transaction.

The payment processing server 460, upon receiving the bar code data, acts to verify the transaction. The verification may require access to the security code server 470 in order to retrieve code information (i.e., the audio unit security code and/or network security code transmitted earlier) to authenticate the bar code data.

If the transaction is verified, then a payment is processed. For example, the payment processing server 460 may have previously-stored credit or debit card account numbers for the user, or the user may maintain an account specifically created for the electronic transaction system which can be debited by the payment processing server 460. After payment is effected, a confirmation is sent from the payment processing server 460 back to the register 410 (step 760), e.g., via the network 450, and the transaction is completed.

As in the first embodiment, the bar code data may be sent to the security code server 470, which may then send a payment authorization to the payment processing server 460 (e.g., a credit card payment processing server). The security code server 470 may store payment information for the user, such as credit card data, which is sent to the payment processing server 460 when the transaction has been authorized. Although the payment processing server 460 and security code server 470 are depicted as separate servers, it is also possible for the functions of these servers to be implemented in a single server.

Although example embodiments have been shown and described in this specification and figures, it would be appreciated by those skilled in the art that changes may be made to the illustrated and/or described example embodiments without departing from their principles and spirit.

## Claims

1. A method for processing a payment at a point-of-sale terminal in a mobile device-based electronic payment system, the method comprising:
initiating an app on a mobile device of a user;
transmitting a security code request to an audio unit connected to the point-of-sale terminal;
receiving, via an audio input of the mobile device, a first security code from the audio unit;
determining a bar code based at least in part on the received first security code, the bar code representing data for authenticating the user when read by a bar code scanner; and
displaying the bar code on a display of the mobile device. [[based on original claim 22]]

2. The method according to claim 1), wherein the first security code is retrieved by the audio unit from the security code server via a network.

3. The method according to claim 1) or 2), wherein the first security code is in the form of an encoded audio signal within a receiving frequency range of the audio input of the mobile device.

4. A method according to one of the preceding claims, the method further comprising:
receiving a first security code from a security code server;
detecting the presence of a mobile device of a user;
receiving bar code data from a scanner of the point-of-sale terminal based on scanning a bar code displayed on a display of the mobile device, the bar code representing data for authenticating the user;
transmitting the bar code data to a payment processing server; and
receiving a confirmation from the payment processing server that a payment has been processed. [[based on original claim 27]]

5. A method according to one of the preceding claims, the method further comprising:
receiving a security code request from a mobile device of a user; and
transmitting the first security code from an audio unit connected to the point-of-sale terminal. [[based on original claim 30]]

6. The method according to claim 5), wherein the first security code is in the form of an encoded audio signal within a receiving frequency range of an audio input of the mobile device.

7. The method according to claim 5), wherein the bar code data comprises a single-use transaction code.

8. The method according to claim 5), further comprising:
retrieving, by the payment processing server, the first security code from the security code server; and
using the first security code to verify the payment.

9. A method according to one of the preceding claims, the method further comprising:
receiving a second security code from a security code server;
performing a comparison operation on the first security code and the second security code;
determining a bar code if the comparison operation on the first security code and the second security code returns a positive result, the bar code representing data for authenticating the user when read by a bar code scanner. [[based on original claim 19]]

10. A system for processing a payment at a point-of-sale terminal in a mobile device-based electronic payment system, the system comprising:
a point-of-sale terminal configured to receive a first security code from a security code server;
an audio unit connected to the point-of-sale terminal which is configured to receive a security code request and, in response, transmit the first security code; and
a bar code scanner connected to the point-of-sale terminal which is configured to scan a bar code displayed on a display of the mobile device and transmit resulting bar code data to the point-of-sale terminal, the bar code representing data for authenticating the user,
wherein the point-of-sale terminal is further configured to transmit the bar code data to a payment processing server and receive a confirmation from the payment processing server that a payment has been processed. [[based original claim 36]]

11. The system according to claim 10), wherein the first security code is in the form of an encoded audio signal within a receiving frequency range of an audio input of the mobile device.

12. The system according to claim 10) or 11), wherein the bar code data comprises a single-use transaction code.

13. A computer-readable medium storing a computer program which, when executed on a processor, executes a method according to one of claims 1-9.
